# EUROPEAN PATENT APPLICATION

(11) **EP 2 424 278 A1**
(43) Date of publication of application: **29.02.2012**
(21) Application number: 10196246.2
(22) Date of filing: 21.12.2010
(51) Int. Cl.: H04W 4/02, H04L 29/08, H04W 64/00

(54) **Content delivery based on direction of mobility**

(30) Priority: 31.08.2010 IN CH25422010
(71) Applicant: Alcatel Lucent, 75007 Paris (FR)
(72) Inventor: Adharapurapu, Krishna, 560092, Bangalore (IN)
(74) Representative: Nicolle, Olivier

(57) **Abstract**

A system capable of delivering content to a mobile device based on the direction of mobility of the device is disclosed. The system keeps track of the direction of travel of the mobile device through locations of predefined tracker base stations passed by the mobile device. Contents from content publishers and mobility history of the mobile device are stored. The contents are defined by a set of rules stored in the rules processor. The rules are based on locations of the tracker base stations and content publishers requirements. Based on the mobility history of a mobile device, contents available and rules processor, the system decides on content to be sent to the mobile device.

## Description

### TECHNICAL FIELD

The present invention relates to telecommunication networks and, more particularly, to delivering content to mobile devices based on the direction of mobility of the mobile devices in the telecommunications network.

### BACKGROUND

Currently, location based services are used to send content to mobile devices. Once the location of a mobile device is confirmed by a base station, information with respect to that location is sent to the mobile device. Every base station covers a predefined area and content that is associated with the area is sent to mobile devices present in the area covered by the base station, through the base station. The content may be current news, weather conditions, store promotions, sales, maps, directions, restaurants specials, movies etc. Location based services work well for content publishers in stationary mobile devices in crowded places like a shopping area, train stations, small towns etc.

In presently available location based services, when a mobile subscriber is on the move and the location of the mobile device is not fixed, information sent to the mobile device user keeps changing based on the areas the user passes through.

Let us consider an example, where a mobile device subscriber is traveling on a highway from city X to city Y. The number of content publishers on highway is reduced in comparison to crowded places. Consider a scenario where a restaurant R1 is present on the highway near base station A and another restaurant R2 in a nearby exit near base station B, both in the direction of the route taken by mobile device to go to city Y. When a mobile device travels on the highway and comes into an area covered by base station A, content related to restaurant R1 is sent, and when the device goes near an area covered by base station B, content related to restaurant R2 is sent. Information about restaurant R1 is sent to more mobile devices by base station A as more mobile devices pass through the highway. Hence, restaurant R1 gets more customers. Restaurant R2 despite being in the vicinity of the highway and in the direction of the route to city Y, does not get enough customers because mobile devices do not come into the area covered by base station B. The business of restaurant R2 does not benefit from content publishing, as most people with mobile devices crossing the highway get information only about restaurant R1. The mobile subscriber does not receive information about both the restaurants and hence does not have a choice.

A better method of delivering content to a mobile device is needed in order for mobile subscribers to receive more accurate, up to date and appropriate information when on the move. All the content publishers must also have fair chance in publishing their services irrespective of their location.

### SUMMARY

The present invention provides a method for delivering content to a mobile device in a mobile service provider network; the method comprising steps of receiving location information of a mobile device from a mobility manager; storing the location information of the mobile device in a mobility history database; determining the direction of mobility of the mobile device movement through the location information stored in the mobility history database; determining content to be sent to the mobile device based on a rules processor, content available and direction of mobility of the mobile device; and transmitting content to the mobile device from the mobility manager. The location information of the device is received from one or more of the plurality of base stations. The location information of the device is received as Global Positioning System co-ordinates. The rules processor contains a set of rules for delivery of content based on content publisher's requirement. A processing logic is used to determine content to be sent to a mobile device based on the rules processor, contents available and direction of the mobility of the device.

Also disclosed herein is a system for providing content to a mobile device based on the direction of mobility of the mobile device in a mobile service provider network, system comprising a mobility manager adapted for communicating with the mobile device through plurality of tracker base stations; a mobility history database adapted for storing the locations of tracker base stations passed by every subscribed mobile device; a contents repository adapted for storing content sent by content publishers; a rules processor adapted for storing a set of rules defined for each content based on content publisher requirement; and a processing logic adapted for determining content to be sent to the mobile device based on the contents available, rules processor and direction of the mobility of the mobile device. The mobility manager is adapted for receiving the location information of the mobile device continuously from the plurality of tracker base stations. The mobility manager is adapted for sending the content determined by the processing logic to the mobile device through one of the plurality of tracker base stations. The processing logic is adapted for deciding the direction of mobility of every mobile device based on the locations stored in the stored mobility history database. The processing logic is adapted for determining content to be sent to the mobile device based on content available, rules processor and direction of mobility of the mobile device.

These and other aspects of the embodiments herein will be better appreciated and understood when considered in conjunction with the following description and the accompanying drawings.

### BRIEF DESCRIPTION OF THE FIGURES

The embodiments herein will be better understood from the following detailed description with reference to the drawings, in which:

FIG. 1 is a schematic illustration of a telecommunication network in accordance with an embodiment of the present invention;

FIG. 2 is a diagram showing the tracker module of figure 1 and its components;

FIG. 3 is an example of tracker base stations 105 layout in accordance to an embodiment of the present invention; and

FIG. 4 is a flowchart showing the working steps in an embodiment of the present invention.

### DETAILED DESCRIPTION OF EMBODIMENTS

The preceding description of the specific embodiments will so fully reveal the general nature of the embodiments herein that others can, by applying current knowledge, readily modify and/or adapt for various applications such specific embodiments without departing from the generic concept as defined by the appended claims, and, therefore, such adaptations and modifications should and are intended to be comprehended within the meaning and range of equivalents of the disclosed embodiments. It is to be understood that the phraseology or terminology employed herein is for the purpose of description and is not limiting. Therefore, while the embodiments herein have been described in terms of preferred embodiments, those skilled in the art will recognize that the embodiments herein can be practiced with modification within the spirit and scope of the appended claims.

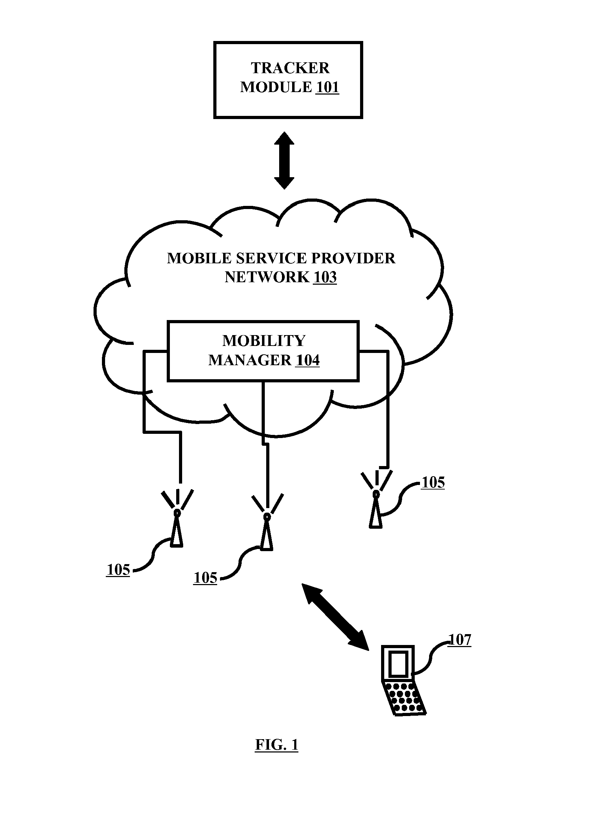

Figure 1 is a schematic illustration of a telecommunication network in accordance with an embodiment of the present invention. A tracker module 101 communicates with a mobile device 107 through the mobile service provider network 103. Mobile subscribers may subscribe to content delivery based on direction of mobility service. Every mobile subscriber can also temporarily enable or disable this service as per need. The mobile service provider network 103 has a mobility manager 104 which keeps track of location and direction of all the mobile devices 107 through base stations, where the subscriber has enabled the content delivery based on direction of mobility service. The mobile service provider network may be GSM, CDMA, EDGE, GPRS etc. The mobility manager 104 also allows different services to be delivered to mobile device 107. The mobile service provider 103 identifies areas in which content delivery based on direction of mobility service is to be implemented and identifies the base stations covering those areas. Each base station provides radio coverage to a geographical area called cell. The base stations can cover areas of any size. The areas covered by base station may be macro/pico/femto cell areas .The base stations which cover an area, where content is delivered based on direction of mobility service, are called tracker base stations. The mobile service provider 103 may identify specific base stations as tracker base stations dynamically. In an example, on working days, the base stations located on the major accesses to and from the major business centers may be designated as tracker base stations, while on the weekends and holidays, the base stations located on the major accesses to and from the shopping and leisure locations may be designated as tracker base stations. The mobile service provider 103 may also designate all base stations as tracker base stations.

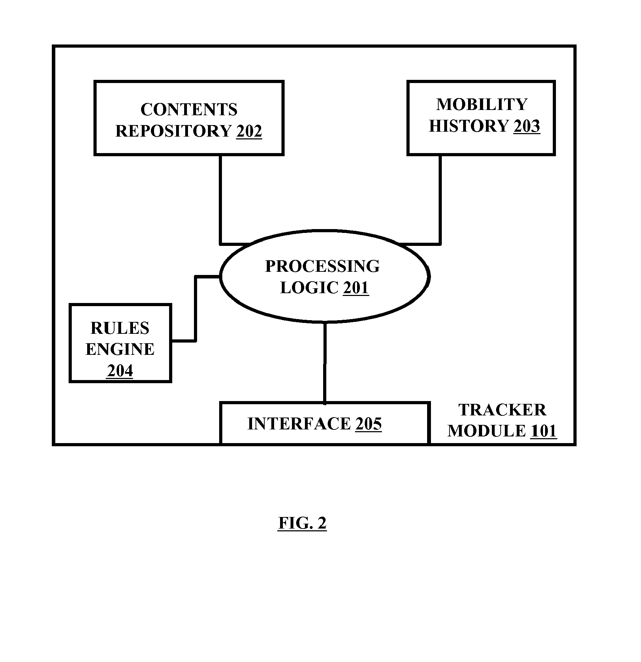

Figure 2 is a diagram showing the tracker module 101 of figure 1 and its components. The tracker module comprises of a processing logic 201, a content repository 202, a mobility history database 203, a rules processor 204 and an interface 205. The content repository 202 contains all the contents which can be sent to mobile device 107. The content may be advertisements, weather update, traffic updates or any other information which may be beneficial to the mobile device 107 user and the content publishers. For example, a cinema complex may send advertisement for movies showing currently along with timings and location. Content publishers may be charged a fee for sending their contents to mobile devices.

The rules processor 204 contains a set of rules for delivery of content. These rules are defined by the mobile service provider based on the content publisher's requirement. The content publishers can specify their requirements for content and send it along with the content to the mobile service provider network 103. The mobile service provider 103 then configures the contents and requirements sent by the content publishers for the tracker module 101 based on location of different tracker base stations. The mobile service provider network 103 then sends the content and rules to the contents repository 202 and rules processor 204 of the tracker module 103 respectively. For example, a road might be shut every Sunday for construction work from 6AM to 3PM. The content publisher can send content saying "Road X closed for construction every Sunday from 6AM-3PM till August 2010" and also specify that content be sent only on Sunday between 6AM to 3 PM to the mobile service provider network. The mobile service provider then configures the content in a format which can be sent to the mobile device. The mobile service provider then configures a set of rules based on the days specified, time specified and the location of the tracker base stations near the road. Information saying "Road X closed for construction every Sunday from 6AM-3PM till August 2010" will be sent to all the mobile devices that are in the vicinity of the road and have subscriber to the content delivery based on mobility service.

The mobility history database 203 is a database containing the mobility information of mobile devices 107 which have subscribed for content delivery based on direction of mobility service. Information about the movement of the mobile device 107 is tracked by the tracker base stations 105. As the mobile device 107 keeps moving from one location to another, tracker base stations in every location register the mobile device. The location of the tracker base stations 105 which register the mobile device 107 gives the location and direction of movement of the mobile device 107. The location of the tracker base stations is then sent to a mobility manager 104 of the mobile service provider network 103 which then sends it to the mobility history database 203 of the tracker module 101. A path illustrating the location and direction of movement of a subscribed mobile device 107 user can be inferred drawn using the location of tracker base stations stored in the mobility history database 203. In another embodiment, the tracker module 101 receives Global Positioning System (GPS) co-ordinates from the mobile device 107 at regular intervals, which is stored in the mobile history database 203. A path illustrating the location and direction of movement of a subscribed mobile device 107 user can be drawn using successive GPS co-ordinates of the subscribed mobile device 107 stored in the mobility history database 203.

The processing logic 201 is the heart of the tracker module 101. The processing logic 201 uses the information from the mobility history database 203, contents repository 202 and rules processor 204 to determine the content to be sent to the mobile device 107.

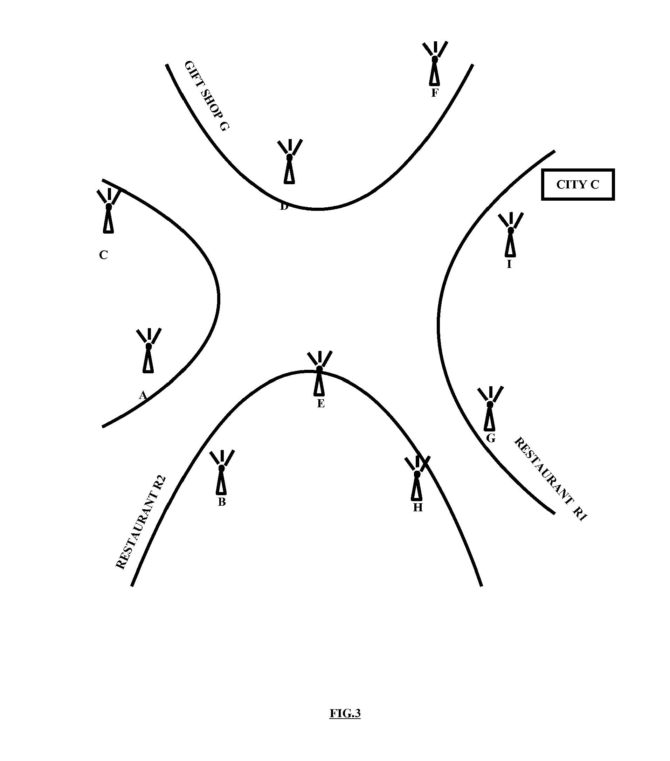

Figure 3 show an example of tracker base stations 105 layout in accordance to an embodiment of the present invention. The figure shows tracker base stations A, B, C, D, E, F, G, H and I along with restaurant R1, restaurant R2, City C and gift shop G. Some of the rules defined in the rules processor 204,for the tracker base station layout of figure 3 may be as follows:
Rule 1: When a mobile device 107 travels in the direction defined by base stations= A - > D-> C and between time =0900-1800 hrs, all days except Sunday, advertisement content of the gift shop G is sent to the mobile device 107. The advertisement content as stored in the contents repository 202 may be informing the user of the mobile device 107 about the variety of gifts available.
Rule 2: When a mobile device 107 travels in the direction = I->E OR I->G AND NOT (H->G) AND between time=0800-2130 hrs, all days of the week, advertisement content for restaurant R1 is sent to the mobile device 107. The advertisement content as stored in the contents repository 202 may inform the user the location of the restaurant, and the directions to reach the same.
Rule 3 When a mobile device travels in the direction = A->B->E->F->I AND between time =0000-2359 hrs, 22^{nd} , 23^{rd} and 24^{th} of December 2010, advertisement content related to upcoming Christmas as stored in the contents repository 202 event in City C is sent to the mobile device 107.

The users of the mobile device 107 travelling along these tracker base stations 105 get information based on the direction of movement of the mobile device. The content publishers like advertisers may pay a fee for using the system to deliver their advertisement if the content delivery leads to good business. Referring to figure 3 and using rule 2, restaurant R1 can get good business over R2 using this type of system despite being located away from the highway. Consider an example, where a user travelling on the highway passes tracker base station B at 7:30PM and then tracker base station E at 7:35PM. With the location information, the direction of the travel is ascertained and content information related to restaurant R1 can be sent to the mobile device 107 along with content information of restaurant R2 alone.

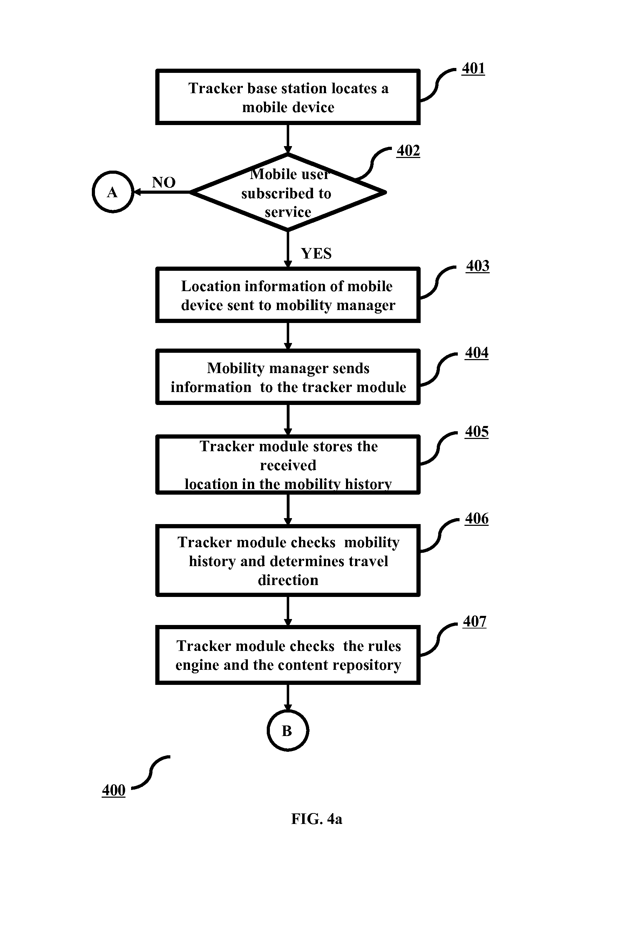

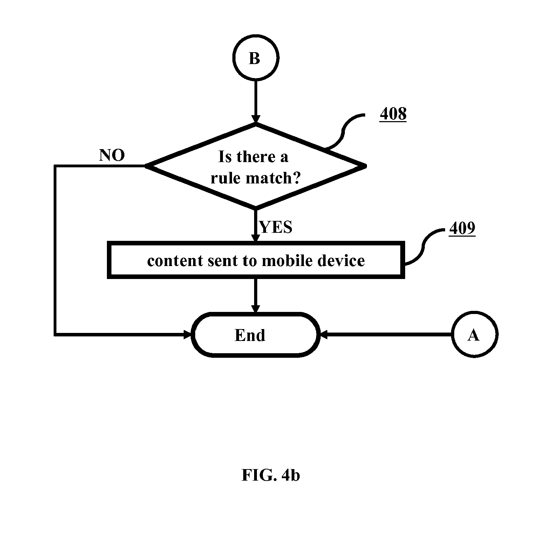

Figure 4 is a flowchart showing the working steps in an embodiment of the present invention. When a mobile device 107 is detected (401) by a tracker base station 105, the tracker base station 105 checks (402) if the mobile device user has subscribed to content delivery based on direction of mobility service. If the mobile device 107 subscriber has not subscribed to the content delivery based on direction of mobility service, location information of the mobile device 107 is not noted. The tracker base station 105 then sends (403) the location information of the mobile device 107 to the mobility manager 104 in the mobile service provider network 103. The location information is sent (404) to the mobility history database 203 of the tracker module 101 by mobility manager 104, which stores (405) this information for every subscribed mobile device user 107. The tracker module 101 checks (406) the mobility history 203 to determine the direction of movement of the mobile device 107. The tracker module 101 checks (407) the rules processor 204 and content repository 202 using the processing logic 201. Based on the mobility history 203 of the mobile device 107 and content repository 202, the rules processor 204 checks (408) if there is any content to be sent to the mobile device 107. If content is found, it is sent (409) to the mobile device 107 through the mobility manager 104 via the tracker base stations 105, else no content is sent to the mobile device 107. The various actions in method 400 may be performed in the order presented, in a different order or simultaneously. Further, in some embodiments, some actions listed in Figures 4a and 4b may be omitted.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and is not limiting. Therefore, while the embodiments herein have been described in terms of preferred embodiments, those skilled in the art will recognize that the embodiments herein can be practiced with modification within the spirit and scope of the claims as described herein.

## Claims

1. A method for delivering content to a mobile device in a mobile service provider network; the method comprising steps of:
receiving location information of a mobile device from a mobility manager;
storing the location information of the mobile device in a mobility history database;
determining the direction of mobility of the mobile device movement through the location information stored in the mobility history database;
determining content to be sent to the mobile device based on a rules processor, content available and direction of mobility of the mobile device; and
transmitting content to the mobile device from the mobility manager.

2. The method of claim 1, wherein the location information of the mobile device is received from one or more of plurality of tracker base stations of the mobile service provider.

3. The method of claim 2, wherein the location information of the mobile device corresponds to the location of a tracker base station through which said mobile device communicates with the mobile service provider.

4. The method of claim 2, wherein said tracker base stations are part of the mobile service provider network.

5. The method of claim 1, wherein the location information of the mobile device is received as Global Positioning System co-ordinates.

6. The method of claim 1, wherein the rules processor contains a set of rules for delivery of content to the mobile device based on content publisher's requirement.

7. A system for providing content to a mobile device based on the direction of mobility of the mobile device in a mobile service provider network, system comprising:
a mobility manager adapted for communicating with the mobile device through one tracker base station, wherein the tracker base station is in the mobile service provider network;
a mobility history database adapted for storing the locations of tracker base stations passed by every subscribed mobile device;
a contents repository adapted for storing content sent by content publishers;
a rules processor adapted for storing a set of rules defined for each content based on content publisher requirement;
a processing logic adapted for determining content to be sent to the mobile device based on the contents available, rules processor and direction of the mobility of the mobile device; and
a mobility manager for transmitting content to be sent to the mobile device.

8. The system as claimed in claim 7, wherein said mobility manager is adapted for receiving the location information of the mobile device from one of the plurality of tracker base stations.

9. The system as claimed in claim 8, wherein said tracker base stations are part of the mobile service provider network.

10. The system as claimed in claim 8, wherein the location information of the mobile device corresponds to the location of a tracker base station through which said mobile device communicates with the mobile service provider.

11. The system as claimed in claim 7, wherein said mobility manager is adapted for sending the content determined by the processing logic to the mobile device through one of the plurality of tracker base stations.

12. The system as claimed in claim 7, wherein said processing logic is adapted for determining the direction of mobility of the mobile device based on the locations stored in the stored mobility history database.
